# EUROPÄISCHE PATENTANMELDUNG

(11) **EP 4 554 022 A1**
(43) Veröffentlichungstag der Anmeldung: **14.05.2025**
(21) Anmeldenummer: 23208854.2
(22) Anmeldetag: 09.11.2023
(51) Int. Cl.: H02G 1/12

(54) **ABISOLIERVORRICHTUNG**

(71) Anmelder: Komax SLE GmbH & Co. KG, 94481 Grafenau (DE)
(72) Erfinder: Albach, Eduard, 94227 Zwiesel (DE)
(74) Vertreter: Kramer Barske Schmidtchen Patentanwälte PartG mbB

(57) **Zusammenfassung**

Eine Abisoliervorrichtung (1) zum Abisolieren von Kabeln weist ein Grundmodul (10) und eine Messerkassette (20) auf. Die Messerkassette (20) weist einen Messerträger (21) und ein Schneidmesser (23) zum Einschneiden in eine Isolierung auf. Der Messerträger (21) und eine erste Antriebswelle (8) des Grundmoduls (10) weisen Anbringungsmittel (12, 28) zur lösbaren Anbringung des Messerträgers (21) an der ersten Antriebswelle (8) auf. Das Schneidmesser (23) oder eine zweite Antriebswelle (9) des Grundmoduls (10) weist eine Führungsnut (26) zum Eingriff eines Führungselements (11), das an dem/der anderen von dem Schneidmesser (23) und der zweiten Antriebswelle (9) vorgesehen ist, auf. Das Schneidmesser (23) ist durch Drehung der zweiten Antriebswelle (9) relativ zu der ersten Antriebswelle (8) und dem Messerträger (21) und eine daraus resultierende Bewegung des Führungselements (11) entlang der Führungsnut (26) relativ zu dem Messerträger (21) auf die Drehachse (x) zu und von der Drehachse (x) weg schwenkbar.

## Beschreibung

Die vorliegende Erfindung betrifft eine Abisoliervorrichtung zum Abisolieren von Kabeln, ein Grundmodul für eine Abisoliervorrichtung, eine Messerkassette für eine Abisoliervorrichtung, eine Kalibrationsstation für eine Messerkassette, ein System mit einer Abisoliervorrichtung, einer Kalibrationsstation und einem Lehrdorn, eine Montagehilfe für eine Abisoliervorrichtung sowie ein System mit einer Abisoliervorrichtung und einer Montagehilfe.

Für die Herstellung von Leitungssteckverbindungen werden Kabelenden abisoliert und mit Kontaktteilen verbunden. Dazu wird bspw. mit einem Messer eine Isolierung am Kabelende abgetrennt und von einem Kern des Kabels abgezogen. Die Abisolierung erfolgt in Fertigungsanlagen üblicherweise automatisiert mit Hilfe entsprechender Abisoliervorrichtungen.

Eine klassische Abisoliervorrichtung weist in der Regel zwei Messer auf, die translatorisch aufeinander zu bewegt werden, um Teile der Isolierung eines Kabels zu schneiden. Dabei verbleibt oft ein ungeschnittener Teil der Isolierung, der beim Abziehen der Isolierung gerissen wird, was für unkritische Anwendungen akzeptabel ist.

Eine Verbesserung bringen so genannte Formmesser, die für eine gewünschte Schneidkontur ausgelegt sind. Diese Formmesser liefern ein besseres Schnittergebnis, sind aber in ihrer Anwendungsbreite im Hinblick auf unterschiedliche Kabel und Schnitttiefen nur eingeschränkt einsetzbar.

Für ein gutes Schnittergebnis mit größerem Einsatzbereich werden Einheiten mit rotierenden Messern eingesetzt. Dabei werden die Messer nicht nur aufeinander zu bewegt, sondern die Messer werden in einer Rotationsbewegung auch um den Umfang des Kabels herum bewegt, wie bspw. in der EP 4 102 660 A1 oder in der EP 3 895 267 A1 offenbart ist. So wird sichergestellt, dass der Einschnitt in das Kabel vollständig umlaufend erfolgt.

Weitere Abisoliervorrichtungen sind beispielsweise in der DE 20 2008 017 576 U1, der CN 106607953 A, der CN 110829288 A, der CN 111063492 A, der CN 212182984 U, der US 2018/0090918 A1, der US 2020/0076174 A1 und der WO 2020/119916 A1 offenbart.

Die zusätzliche Rotationsbewegung bei Verwendung rotierender Messer bedingt eine komplexere Mechanik als bei klassischen Abisoliervorrichtungen mit lediglich translatorischer Bewegung der Messer. Dadurch ist eine Wartung oder eine Umrüstung aufwändiger, was sich bspw. wegen unproduktiver Stillstandszeiten nachteilig auf die Produktivität der entsprechenden Anlage auswirkt.

Eine Aufgabe der vorliegenden Offenbarung ist, die Produktivität zu verbessern.

Diese Aufgabe wird gelöst durch eine Abisoliervorrichtung nach Anspruch 1, ein Grundmodul nach Anspruch 8, eine Messerkassette nach Anspruch 9, eine Kalibrationsstation nach Anspruch 10, ein System nach Anspruch 11, eine Montagehilfe nach Anspruch 12 oder ein System nach Anspruch 15. Weiterbildungen sind in den abhängigen Ansprüchen angegeben.

Die Messerkassette lässt sich vorbereiten und als Einheit an dem Grundmodul bzw. einer Maschine anbringen bzw. abnehmen und somit zügig wechseln. Die Vorbereitung der Messerkassette kann bspw. mit Hilfe der Kalibrationsstation erfolgen, insbesondere während das Grundmodul bzw. die Maschine einen anderen Produktionsauftrag unter Verwendung einer anderen Messerkassette durchführt.

Die Messerkassette ist einfach und schnell an dem Grundmodul anbringbar und davon abnehmbar. Das Grundmodul muss zum Anbringen oder Abnehmen der Messerkassette nicht demontiert werden. Insbesondere kann die Messerkassette angebracht und abgenommen werden, ohne Teile des Grundmoduls, wie bspw. die erste und die zweite Antriebswelle, zu demontieren. Die Antriebswellen und deren Lagerung am Gehäuse des Grundmoduls können während Anbringung und Abnahme der Messerkassette unverändert bleiben. Bevorzugt behalten die Antriebswellen ihre Lagerung bei, wenn die Messerkassette von dem Grundmodul abgenommen wird. Somit wird ein schneller und einfacher Austausch der Messerkassette ermöglicht und werden Stillstandszeiten verkürzt.

Die erste und die zweite Antriebswelle können ineinander gelagert sein. Bspw. kann die erste Antriebswelle direkt an dem Gehäuse des Grundmoduls gelagert sein, während die zweite Antriebswelle an der ersten Antriebswelle und damit indirekt an dem Gehäuse gelagert sein kann. Alternativ können beide Antriebswellen direkt oder indirekt an dem Gehäuse gelagert sein. In der zweiten Antriebswelle kann ein Durchgangsloch entlang der gemeinsamen Drehachse zum Hindurchführen eines zu bearbeitenden Kabels vorgesehen sein. Das Durchgangsloch kann koaxial zu einem Durchgangsloch in der Messerkassette, insbesondere einem Durchgangsloch in dem Messerträger und einem Durchgangsloch in der Deckplatte, sein.

Das Ende der ersten Ausgangswelle, an dem der Messerträger lösbar anbringbar ist, kann bspw. eine ebene und/oder ringförmige Fläche senkrecht zu der Drehachse sein. Insbesondere kann es sich dabei um eine Stirnfläche der ersten Ausgangswelle handeln. Die Fläche kann an einem nach außen erweiterten Flansch ausgebildet sein. Die Mitnehmerstifte können auf der Fläche vorgesehen sein.

Die zweite Ausgangswelle kann eine in Richtung des Messerträgers gewandte, zu der Drehachse senkrechte, ebene Stirnfläche aufweisen. Die Führungsstifte können auf dieser Fläche vorgesehen sein. Die Stirnflächen der ersten und der zweiten Ausgangswelle können in derselben Ebene oder in zueinander parallelen Ebenen liegen.

Die erste und die zweite Antriebswelle können durch einen Teil des Gehäuses des Grundmoduls, insbesondere durch einen Teil, an dem sie gelagert sind, hindurchragen. Der Antrieb (bspw. Elektromotoren) der Antriebswellen kann auf einer ersten Seite des Teils des Gehäuses vorgesehen sein, und der zur Anbringung der Messerkassette vorgesehene Teil der ersten und der zweiten Antriebswelle kann auf einer zweiten, der ersten Seite gegenüberliegenden Seite des Teils des Gehäuses vorgesehen sein.

Die Messerkassette bzw. der Messerträger ist bevorzugt nur über die Antriebswellen, aber nicht direkt an dem Gehäuse des Grundmoduls gelagert. Dies ermöglicht eine einfache und günstige Ausgestaltung und eine einfache und schnelle Anbringung bzw. Abnahme der Messerkassette.

Zum Verstellen der Schwenkpositionen der Schneidmesser werden die erste und die zweite Antriebswelle relativ in Bezug aufeinander gedreht. Je nach Richtung der relativen Drehung werden die Schneidmesser auf das Durchgangsloch in der Messerkassette, das durch das Durchgangsloch in dem Messerträger und das Durchgangsloch in der Deckplatte gebildet wird, zu, d.h. in Richtung einer Schneidstellung, oder davon weg, d.h. in Richtung einer Grundstellung, geschwenkt. Zur Drehung der Messerkassette mit unveränderten Stellungen, d.h. Schwenkpositionen, der Schneidmesser werden die erste und die zweite Antriebswelle synchron in derselben Richtung und mit derselben Drehzahl gedreht. Die relative Drehung kann auch während der Drehung beider Antriebswellen erfolgen, indem eine Antriebswelle mit einer anderen Geschwindigkeit dreht als die andere, so dass die Stellung der Schneidmesser bzw. die Schneidtiefe während des Schneidvorgangs, d.h. während der Drehung der Messerkassette um das zu bearbeitende Kabel herum, verändert wird. Nach dem Schneidvorgang können die Schneidmesser bspw. vorerst in der Schneidstellung bleiben, während das Kabel aus dem Durchgangsloch der Messerkassette gezogen wird, so dass der abgeschnittene Teil der Isolierung mit Hilfe der Schneidmesser von dem Kern des Kabels abgezogen wird. Anschließend können die Schneidmesser zu der Grundstellung zurückgeschwenkt werden und für einen neuen Abisoliervorgang zur Verfügung stehen.

Die Mitnehmerstifte ermöglichen eine formsichere Anbringung der Messerkassette an dem Grundmodul. Die Mitnehmerstifte stellen sicher, dass die Messerkassette richtig positioniert und um das zu bearbeitende Kabel gedreht wird. Die Mitnehmerstifte ermöglichen ein einfaches und schnelles Anbringen und Abnehmen der Messerkassette an bzw. von dem Ende der ersten Antriebswelle. Die Messerkassette mit dem scheibenförmigen Messerträger und der scheibenförmigen Deckplatte weist eine kompakte Form auf, die sich leicht handhaben und aufbewahren lässt. Die Schneidmesser können sich zwischen dem Messerträger und der Deckplatte befinden und sind somit geschützt.

Die Bestückung der Messerkassette mit Schneidmessern, d.h. die Anzahl und/oder die Positionen der Schneidmesser, die von dem Messerträger gelagert werden, kann abhängig von dem zu bearbeitenden Kabel variieren. Derselbe Messerträger kann mit unterschiedlichen Anzahlen und/oder Positionen von Schneidmessern bestückt werden. Für heikle Schnitte (z.B. mit Schirmfolie) werden bevorzugt wenige, bspw. zwei oder drei, Schneidmesser verwendet, um etwas mehr von der Schneide (Schnittkante) in Eingriff zu bringen. Für Schnitte und besonders ein nachfolgendes Abziehen von dickeren Kabelteilen mit stärkerer Haftung (z.B. mit Kabelmantel oder innerem Dielektrikum) wird bevorzugt eine größere Anzahl von Schneidmessern (bspw. vier oder sechs) verwendet, wodurch die Standzeit der Schneidmesser vergrößert wird und beim Abziehen die mehreren Kontaktpunkte ein Wegrutschen des abzuziehenden Kabelteils sowie eine übermäßige Beanspruchung der Schneidmesser verhindern.

Die Montagehilfe kann die Schneidmesser mit dem zentralen Zapfen in ihrer Grundstellung halten, somit die Montage erleichtern und die Komplexität der Mechanik der Messerkassette gering halten, da bspw. keine Rückstellfedern erforderlich sind. Alternativ/zusätzlich können die Schneidmesser durch Rückstellfedern oder andere elastische Mittel bspw. in Richtung der Grundstellung vorgespannt sein.

Mit Hilfe der Kalibrationsstation kann sichergestellt werden, dass die Schneidmesser eine gewünschte Einschnitttiefe sicher erreichen und nicht überschreiten. Insbesondere kann mit der Kalibrationsstation die Kalibration der Messerkassette unabhängig von dem Grundmodul erfolgen.

Weitere Merkmale und Zweckmäßigkeiten ergeben sich aus der Beschreibung von beispielhaften Ausführungsformen anhand der Figuren. Von den Figuren zeigen:
Fig. 1 eine perspektivische Ansicht eines Systems mit einer Abisoliervorrichtung, einer Kalibrationsstation und einem Lehrdorn,
Fig. 2 eine perspektivische Explosionsansicht der Abisoliervorrichtung,
Fig. 3 eine perspektivische Ansicht der Kalibrationsstation mit daran angebrachter Messerkassette und dem Lehrdorn,
Fig. 4 eine perspektivische Explosionsansicht der Kalibrationsstation, der Messerkassette und des Lehrdorns,
Fig. 5a und Fig. 5b jeweils eine Vorderansicht eines Messerträgers mit drei bzw. sechs daran angebrachten Schneidmessern, und
Fig. 6a und Fig. 6b jeweils eine Vorderansicht eines Messerträgers mit zwei bzw. vier daran angebrachten Schneidmessern.

Nachfolgend wird eine Ausführungsform unter Bezugnahme auf die Figuren beschrieben. Gleiche Merkmale sind in allen Figuren durch dieselben Bezugszeichen bezeichnet, wobei aus Gründen der Übersichtlichkeit nicht in allen Figuren alle Bezugszeichen eingesetzt sind.

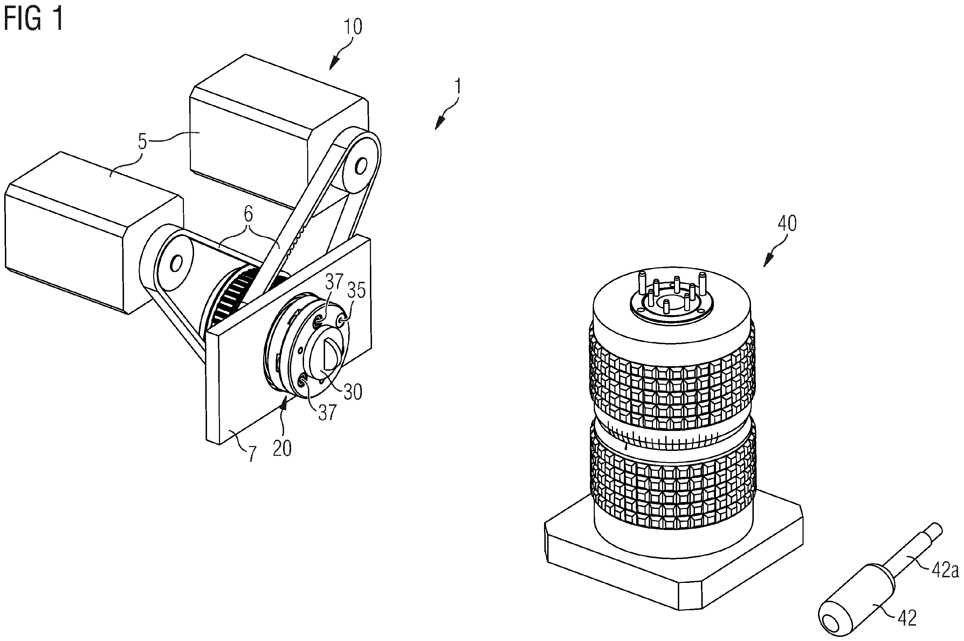

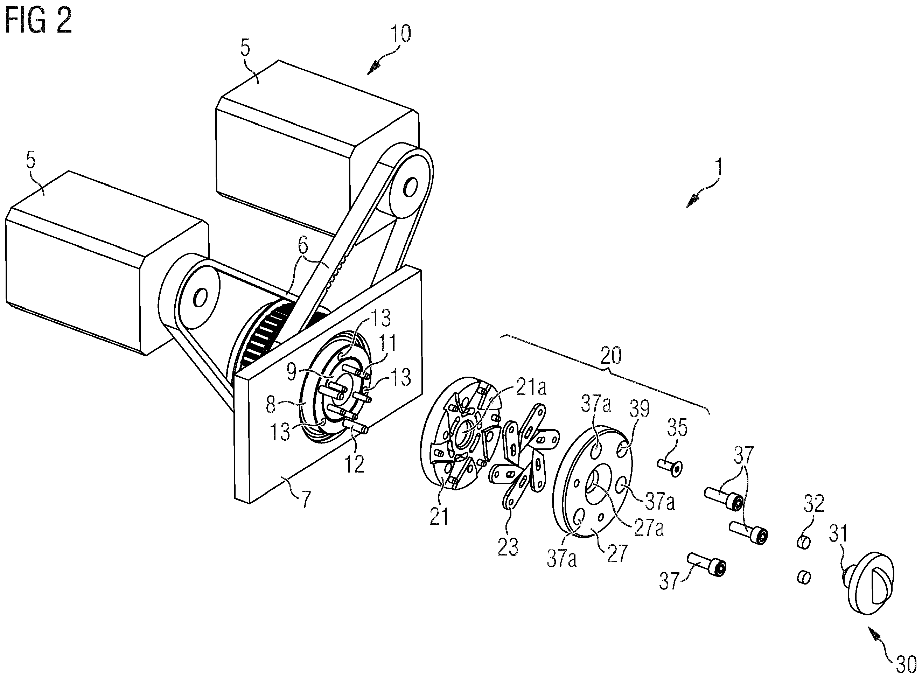

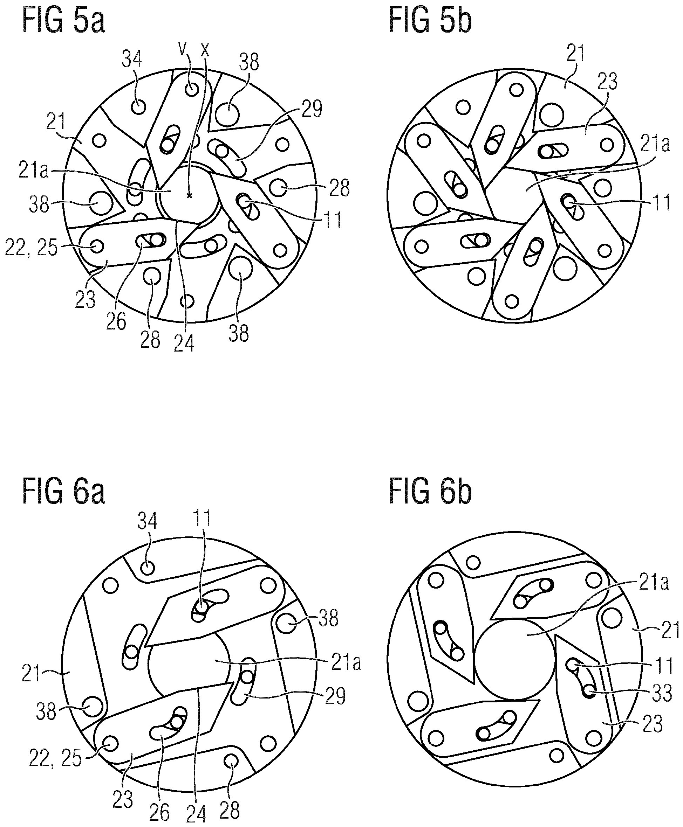

Fig. 1 zeigt eine perspektivische Ansicht eines Systems mit einer Abisoliervorrichtung 1, einer Kalibrationsstation 40 und einem Lehrdorn 42. Fig. 2 zeigt eine perspektivische Explosionsansicht der Abisoliervorrichtung 1. Die Abisoliervorrichtung 1 weist ein Grundmodul 10 mit einem Gehäuse 7 und zwei an dem Gehäuse 7 gelagerten Antriebswellen 8, 9 sowie eine Messerkassette 20 auf. Die Antriebswellen 8, 9 verlaufen ineinander. Genauer gesagt verläuft eine zweite Antriebswelle 9 innerhalb einer ersten Antriebswelle 8. Die erste und die zweite Antriebswelle 8, 9 sind jeweils als Hohlwelle ausgebildet. Alternativ kann die zweite Antriebswelle 9 als massive Welle, d.h. ohne ein zentrales Durchgangsloch, ausgebildet sein. Die erste und die zweite Antriebswelle 8, 9 verlaufen koaxial. Die erste und die zweite Antriebswelle 8, 9 sind um eine gemeinsame Drehachse x (siehe Fig. 5a) drehbar. Die Abisoliervorrichtung 1 weist zwei Antriebsmotoren 5 auf. Die erste und die zweite Antriebswelle 8, 9 sind jeweils durch einen der zwei Antriebsmotoren 5 über einen Antriebsriemen 6 drehbar.

Die erste und die zweite Antriebswelle 8, 9 weisen jeweils eine ebene Stirnfläche an einem Ende auf. Die Stirnflächen sind senkrecht zu der Drehachse x und weisen in dieselbe Richtung. Auf der Stirnfläche der ersten Antriebswelle 8 sind (bei der vorliegenden Ausführungsform zwei) Mitnehmerstifte 12 vorgesehen, die parallel zu der Drehachse x von der Stirnfläche der ersten Antriebswelle 8 vorstehen. In der Stirnfläche der ersten Antriebswelle 8 sind drei Gewindelöcher 13 vorgesehen. Auf der Stirnfläche der zweiten Antriebswelle 9 sind (bei der vorliegenden Ausführungsform sechs) Führungsstifte 11 vorgesehen, die parallel zu der Drehachse x von der Stirnfläche der zweiten Antriebswelle 9 vorstehen.

Die Messerkassette 20 weist einen Messerträger 21, (bei der vorliegenden Ausführungsform sechs) an dem Messerträger 21 schwenkbar angebrachte Schneidmesser 23 und eine Deckplatte 27 auf. Fig. 5a und Fig. 5b zeigen jeweils eine Vorderansicht des Messerträgers 21, wobei in der in Fig. 5a gezeigten Konfiguration lediglich drei der sechs Schneidmesser 23 an dem Messerträger 21 angebracht sind. D.h., der Messerträger 21 ist mit unterschiedlichen Anzahlen und/oder Positionen der Schneidmesser 23 konfigurierbar. Der Messerträger 21 ist im Wesentlichen als kreisrunde Scheibe ausgebildet. Der Messerträger 21 weist ein zentrales Durchgangsloch 21a zum Hindurchführen eines zu bearbeitenden Kabels auf. Der Messerträger 21 weist (bei der vorliegenden Ausführungsform sechs) Lagerzapfen 22 zum schwenkbaren Lagern der Schneidmesser 21 auf. Die Lagerzapfen 22 stehen parallel zu der Drehachse x von dem Messerträger 21 vor. Der Messerträger 21 weist Vertiefungen auf, in denen die Schneidmesser 23 angeordnet sind. Der Messerträger 21 weist (bei der vorliegenden Ausführungsform zwei) Anbringungslöcher 28 auf. Die Anbringungslöcher 28 sind dazu ausgebildet, die Mitnehmerstifte 12 aufzunehmen, so dass der Messerträger 21 mit einer bestimmten Drehposition an der ersten Antriebswelle 8 des Grundmoduls 10 angebracht werden kann. Der Messerträger 21 weist (bei der vorliegenden Ausführungsform sechs) Langlöcher 29 auf. Die Langlöcher 29 sind so ausgebildet, dass die Führungsstifte 11 in einem Zustand, in dem der Messerträger 21 an der ersten Antriebswelle 8 angebracht ist, durch die Langlöcher 29 verlaufen und entlang der Langlöcher 29 bewegbar sind, so dass der Messerträger 21 innerhalb eines von den Langlöchern 29 bestimmten Bereichs relativ zu der zweiten Antriebswelle 9 des Grundmoduls 10, an der die Führungsstifte 11 vorgesehen sind, drehbar ist. Insbesondere sind die Langlöcher 29 gekrümmt und verlaufen entlang eines Kreises um die Drehachse x. Der Messerträger 21 weist (bei der vorliegenden Ausführungsform) ein Gewindeloch 34 auf. Der Messerträger 21 weist (bei der vorliegenden Ausführungsform drei) Durchgangslöcher 38 auf.

Die Schneidmesser 23 weisen eine im Wesentlichen identische Ausgestaltung auf, weshalb nachfolgend beispielhaft eines der Schneidmesser 23 beschrieben wird. Das Schneidmesser 23 weist eine im Wesentlichen längliche Plattenform auf. Das Schneidmesser 23 weist ein Loch 25 an einem Ende in seiner Längsrichtung auf. Das Loch 25 ist dazu ausgebildet, einen der Lagerzapfen 22 an dem Messerträger 21 aufzunehmen, so dass das Schneidmesser 23 um eine Schwenkachse v relativ zu dem Messerträger 21 in einer Ebene senkrecht zu der Drehachse x schwenkbar an dem Messerträger 21 gelagert ist. Mit anderen Worten, das Loch 25 und der Lagerzapfen 22 definieren einen Schwenkpunkt, an dem das Schneidmesser 23 schwenkbar an dem Messerträger 21 angebracht ist. Das Schneidmesser 23 weist ein Langloch 26 auf. Das Langloch 26 ist dazu ausgebildet, einen der Führungsstifte 11 aufzunehmen. Der Führungsstift 11 ist entlang des Langslochs 26 bewegbar. Das Langloch 26 kann geradlinig (siehe Figuren 5a und 5b) oder gekrümmt (siehe Figuren 6a und 6b) sein. In einem an dem Messerträger 21 montierten Zustand des Schneidmessers 23 überlappt ein Teil des Langlochs 26 in dem Schneidmesser 23 mit einem Teil eines darunter liegenden Langlochs 29 in dem Messerträger 21. Insbesondere kann das Langloch 26 eine andere Krümmung und/oder Ausrichtung als die Langlöcher 29 in dem Messerträger 21 aufweisen. Das Schneidmesser 23 weist eine Schneide 24 auf. Die Schneide 24 ist in dem an dem Messerträger 21 montierten Zustand auf einer dem Durchgangsloch 21a in dem Messerträger 21, d.h. der Drehachse x, zugewandten Seite des Schneidmessers 23 vorgesehen.

Der Messerträger 21 ist mittels der Mitnehmerstifte 12 und der Anbringungslöcher 28 starr, d.h. mit einer festen, vorbestimmten Drehposition, an der ersten Antriebswelle 8 anbringbar. Die Führungsstifte 11 an der zweiten Antriebswelle 9 verlaufen in einem Zustand, in dem der Messerträger 21 an der ersten Antriebswelle 8 angebracht ist, durch die Langlöcher 29 in dem Messerträger 21 hindurch und sind in die Langlöcher 26 in den Schneidmessern 23, die an dem Messerträger 21 montiert sind, eingefügt. Bei einer Drehung der zweiten Antriebswelle 9 relativ zu der ersten Antriebswelle 8 bewegen sich die Führungsstifte 11 innerhalb der Langlöcher 29 relativ zu dem Messerträger 21. Durch diese Bewegung bewegen sich die Führungsstifte 11 innerhalb der Langlöcher 26 der Schneidmesser 23 und schwenken die Schneidmesser 23 um die jeweiligen Schwenkachsen v. Somit können die Schneiden 24 der Schneidmesser 23 durch relative Drehung der zweiten Antriebswelle 9 in Bezug auf die erste Antriebswelle 8, je nach Richtung der relativen Drehung, auf das Durchgangsloch 21a/die Drehachse x zu bzw. von dem Durchgangsloch 21a/der Drehachse x weg geschwenkt werden. Bei Schwenkung auf das Durchgangsloch 21a/die Drehachse x zu aufgrund einer relativen Drehung der zweiten Antriebswelle 9 in Bezug auf die erste Antriebswelle 8 in einer ersten Richtung werden die Schneidmesser 23 in eine Schneidstellung geschwenkt, in der die Schneiden 24 der Schneidmesser 23 in die Isolierung eines in das Durchgangsloch 21a eingefügten Kabels einschneiden können. Durch anschließende oder gleichzeitige gemeinsame Drehung der ersten und der zweiten Antriebswelle 8, 9 um die Drehachse x können die Schneiden 24 die Isolierung des Kabels um einen Kern des Kabels herum gleichmäßig schneiden. Der abgeschnittene Teil der Isolierung kann danach von dem Kabel entfernt, bspw. abgezogen, werden, indem das Kabel relativ zu der Abisoliervorrichtung 1 entlang der Drehachse x bewegt wird. Durch eine relative Drehung der zweiten Antriebswelle 9 in Bezug auf die erste Antriebswelle 8 in einer zu der ersten Richtung entgegengesetzten zweiten Richtung können die Schneidmesser 23 nach dem Schneidvorgang wieder von dem Durchgangsloch 21a/der Drehachse x bzw. dem Kabel weg zurück in die Grundstellung geschwenkt werden, so dass das bearbeitete Kabel aus dem Durchgangsloch 21a entfernt und ein neues Kabel eingebracht werden kann.

Die Anzahl der Schneidmessser 23 kann abhängig vom Anwendungsfall, insbesondere von dem zu bearbeiteten Kabel gewählt werden. An dem in dem in den Figuren 5a und 5b gezeigten Messerträger 21 können ein bis sechs Schneidmesser 23 angebracht werden. Dabei ist eine rotationssymmetrische Anordnung der Schneidmesser 23 mit zwei oder drei (Fig. 5a) oder sechs (Fig. 5b) Schneidmessern 23 bevorzugt.

Der Messerträger 21 kann eine alternative Ausgestaltung aufweisen, wie bspw. in den Figuren 6a und 6b dargestellt ist. An dem in den Figuren 6a und 6b dargestellten Messerträger 21 können ein bis vier Schneidmesser 21 angebracht werden. Wiederum ist eine rotationssymmetrische Anordnung der Schneidmesser 23 mit zwei (Fig. 6a) oder vier (Fig. 6b) Schneidmessern 23 bevorzugt. Bei Verwendung des in den Figuren 6a und 6b dargestellten Messerträgers 21 müssen die Anzahl und/oder die Positionen der Mitnehmerstifte 12 und der Führungsstifte 11 ggf. an die Anzahl und/oder die Positionen der Anbringungslöcher 28 in dem Messerträger 21 bzw. an die Anzahl und/oder die Positionen der Langlöcher 26, 29 angepasst werden. Die Anzahl und/oder Positionen der Gewindelöcher 13 müssen ggf. an die Anzahl und/oder Position der Durchgangslöcher 38 angepasst werden.

Die Deckplatte 27 ist im Wesentlichen als kreisrunde Scheibe ausgebildet. Die Deckplatte 27 weist ein zentrales Durchgangsloch 27a zum Hindurchführen des Kabels auf. Die Deckplatte 27 weist ein Durchgangsloch 39 auf. Die Deckplatte 27 ist mit einer Schraube 35 an dem Messerträger 21 verschraubt. Die Schraube 35 ist in das Durchgangsloch 39 eingefügt und in das Gewindeloch 34 des Messerträgers 21 geschraubt. Die Schneidmesser 23 sind zwischen dem Messerträger 21 und der Deckplatte 27 angeordnet. Die Deckplatte 27 weist (bei der vorliegenden Ausführungsform drei) Durchgangslöcher 37a auf. Die Durchgangslöcher 37a sind an den Durchgangslöchern 38 des Messerträgers 21 bzw. den Gewindelöchern 13 der ersten Antriebswelle 8 des Grundmoduls 10 entsprechenden Positionen angeordnet. Die Messerkassette 20 ist an der ersten Antriebswelle 8 mit Schrauben 37 verschraubt. Die Schrauben 37 verlaufen durch die Durchgangslöcher 37a und 38 und sind in die Gewindelöcher 13 geschraubt.

Fig. 1 zeigt einen Zustand, in dem eine Montagehilfe 30 an der Messerkassette 20 angebracht ist. Ein Zapfen 31 der Montagehilfe 30 ist entlang der Drehachse x in das Durchgangsloch 27a der Deckplatte 27, einen zwischen den Schneiden 24 der Schneidmesser 23 gebildeten Raum und das Durchgangsloch 21a des Messerträgers 21 eingefügt. Die Messerkassette 20 kann mit der an der Messerkassette 20 angebrachten Montagehilfe 30 von dem Grundmodul 10 abgenommen werden, während die Schneidmesser 23 durch den Zapfen 31 in ihrer Stellung, bspw. in der Grundstellung, gehalten werden. Die Montagehilfe 30 wird anhand von bspw. zwei Magneten 32 an der Messerkassette 20, insbesondere an der Deckplatte 27, gehalten.

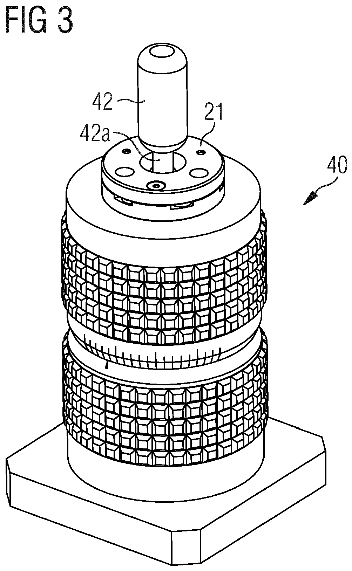

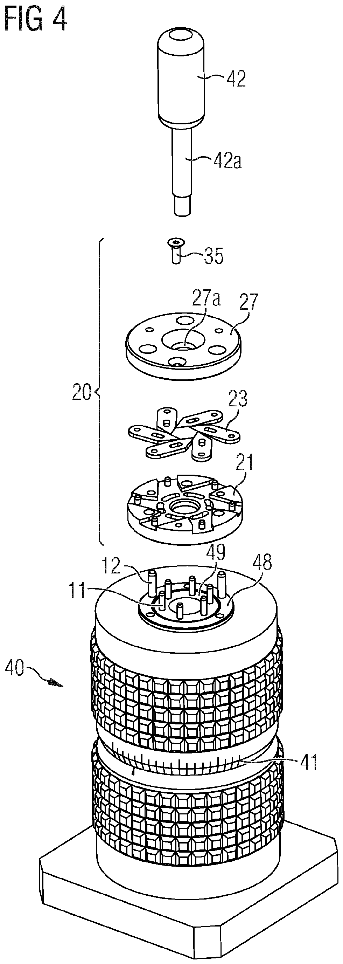

Nach Abnahme von bzw. vor Anbringung an dem Grundmodul 10 kann die Messerkassette 20 zu Kalibrationszwecken an der Kalibrationsstation 40 angebracht werden, wie in Fig. 3 dargestellt ist. Fig. 4 zeigt eine entsprechende Explosionsansicht.

Die Kalibrationsstation 40 weist analog zu der ersten und der zweiten Antriebswelle 8, 9 des Grundmoduls 10 eine erste Welle 48 und eine zweite Welle 49 auf. Die zweite Welle 49 verläuft innerhalb der ersten Welle 48. Die erste Welle 48 ist als Hohlwelle ausgebildet. Die erste Welle 48 kann identisch mit einem Gehäuse der Kalibrationsstation 40 sein. Die erste Welle 48 kann integral mit einem Gehäuseoberteil der Kalibrationsstation 40 ausgebildet sein, und/oder die zweite Welle 49 kann integral mit einem Gehäuseunterteil der Kalibrationsstation 40 ausgebildet sein. Die erste und die zweite Welle 48, 49 sind koaxial ausgerichtet und relativ zueinander drehbar. Analog zu der ersten Antriebswelle 8 des Grundmoduls 10 weist die erste Welle 48 zwei Mitnehmerstifte 12 auf. Analog zu der zweiten Antriebswelle 9 weist die zweite Welle 49 sechs Führungsstifte 11 auf. Die Kalibrationsstation 40 weist eine Skala 41 auf, die eine Drehstellung der zweiten Welle 49 relativ zu der ersten Welle 48 anzeigt.

In der Darstellung in Fig. 3 ist der Lehrdorn 42 in die an der Kalibrationsstation 40 angebrachte Messerkassette 20 eingesteckt. Insbesondere ist ein stabförmiger Abschnitt 42a des Lehrdorns 42, der einen kreisförmigen Querschnitt aufweist, ähnlich dem Zapfen 31 der Montagehilfe 30 in das Durchgangsloch 27a der Deckplatte 27, den zwischen den Schneiden 24 der Schneidmesser 23 gebildeten Raum und das Durchgangsloch 21a des Messerträgers 21 eingefügt. Der stabförmige Abschnitt 42a weist einen Durchmesser identisch mit oder ähnlich dem Durchmesser des Kerns des zu bearbeiteten Kabels auf. Durch Drehen der ersten und der zweiten Welle 48, 49 relativ zueinander können die Schneidmesser 23 der an der Kalibrationsstation 40 angebrachten Messerkassette 20 auf den stabförmigen Abschnitt 42a zu in Richtung der Schneidstellung geschwenkt werden, bis die Schneiden 24 an dem stabförmigen Abschnitt 42a anliegen. Die Drehstellung der zweiten Welle 49 relativ zu der ersten Welle 48 kann in diesem Zustand von der Skala 41 abgelesen und bspw. als Kalibrierwert bzw. Parameter in einer Steuerungsvorrichtung des Grundmoduls 10 oder der übergeordneten Maschine oder Anlage gespeichert werden. Auf diese Weise kann die Messerkassette 20 bereits vor Anbringung an dem Grundmodul 10 einfach und schnell kalibriert werden.

Je nach Verwendung und Messerkontur, wie bspw. eine gerade oder eine gebogene Kontur, kann ein Lehrdorn 42 verwendet werden oder können mehrere Lehrdorne 42 mit unterschiedlichen Durchmessern des stabförmigen Abschnitts 42a verwendet werden.

Die Messerkassette 20 kann unabhängig von dem Grundmodul 10 kalibriert werden. Insbesondere kann die Messerkassette 20 kalibriert werden, während das Grundmodul 10 mit einer zweiten, derzeit daran angebrachten Messerkassette arbeitet. Die zweite Messerkassette kann bspw. unter Verwendung einer zweiten Montagehilfe von dem Grundmodul 10 abgenommen werden. Unmittelbar im Anschluss daran kann die nun kalibrierte und unter Verwendung der Montagehilfe 31 von der Kalibrationsstation 40 abgenommene Messerkassette 20 an dem Grundmodul 10 angebracht werden. Nachdem die ermittelten Kalibrierwerte der Steuerung mitgeteilt wurden, kann die Produktion mit der Messerkassette 20 fortgesetzt werden, während die zweite Messerkassette bspw. gewartet und/oder neu kalibriert wird. Somit lassen sich Stillstandszeiten verkürzen.

Bei der gezeigten Ausführungsform ist die Deckplatte 27 mit Hilfe der Schraube 35 an dem Messerträger 21 befestigt. Es können auch zwei oder mehr Schrauben 35 vorgesehen sein. Alternativ/zusätzlich können andere Befestigungsmittel eingesetzt werden.

Die Montagehilfe 30 kann einen Spreizdorn, einen Bajonettverschluss oder einen vergleichbaren Schnellkupplungsmechanismus aufweisen, der dazu ausgebildet ist, die Deckplatte 27 und den Messerträger 21 mit den dazwischen angeordneten Schneidmessern 23 zusammenzuhalten. In diesem Fall ist eine Verschraubung der Deckplatte 27 an dem Messerträger 21 durch die Schraube 35 nicht erforderlich, und die Schraube 35 kann weggelassen werden. In einem an dem Grundmodul 10 befestigten Zustand wird bei der obigen Ausführungsform die Deckplatte 27 auch mittels der Schrauben 37 an dem Messerträger 21 gehalten.

Die Deckplatte 27 ist nicht zwingend erforderlich und kann weggelassen werden. Die Schneidmesser 23 können an dem Messerträger 21 unmittelbar gesichert/gehalten werden, und der Messerträger 21 kann an dem Grundmodul 10 unmittelbar gesichert/gehalten werden.

Die Messerkassette 20 muss nicht zwingend mit Hilfe der Schrauben 37 an dem Grundmodul 10 befestigt sein. Bspw. können die Mitnehmerstifte 12 durch Löcher in der Deckplatte 27 hindurch verlaufen, und Enden der Mitnehmerstifte 12 können mit Gewinden versehen sein, auf die Muttern geschraubt werden. Alternativ/zusätzlich kann die Messerkassette 20 durch eine, bspw. zentral in Bezug auf die Drehachse x angeordnete, Überwurfmutter an dem Grundmodul 10 befestigt werden.

Die Anzahl der Schrauben 37, der Durchgangslöcher 37a, 38 und der Gewindelöcher 13 ist nicht auf drei beschränkt. Die Anzahl der Schraube 35, des Durchgangslochs 39 und des Gewindelochs 34 ist nicht auf eins beschränkt. Die Anzahl der Mitnehmerstifte 12 und der Anbringungslöcher 28 ist nicht auf zwei beschränkt.

Bei der gezeigten Ausführungsform weist die Montagehilfe 30 den Zapfen 31 zu Positionierung der Schneidmesser 23 in der Grundstellung auf. Alternativ/zusätzlich kann die Montagehilfe 30 einen oder mehrere Positionsstifte 33 (siehe Fig. 6b) aufweisen, die dazu ausgebildet sind, durch die Deckplatte 27 hindurch in die Langlöcher 26 der Schneidmesser 23, insbesondere an dem anderen Ende der Langlöcher 26 als die Führungsstifte 11 in der Grundstellung, einzugreifen. Dies ermöglicht eine problemlose Verwendung der Schneidmesser 23, die durch wiederholtes Nachschleifen kleiner werden. Alternativ können die Positionsstifte 33 der Montagehilfe 30 die Schneidmesser 23 an einer anderen unkritischen Stelle in einer gewünschten Stellung fixieren.

Die Magnete 32 sind zur Befestigung der Montagehilfe 30 an der Messerkassette 20 nicht zwingend erforderlich. Alternativ/zusätzlich können andere Befestigungsmittel, wie bspw. eine oder mehrere Schrauben, verwendet werden. Die Befestigung der Montagehilfe 30 an der Messerkassette 20 kann mit Hilfe des oben erwähnten Spreizdorns oder des oben erwähnten Bajonettverschlusses erfolgen.

Die Positionen der Mitnehmerstifte 12 und der Anbringungslöcher 28 können vertauscht werden. Bspw. können die Mitnehmerstifte 12 an einer der ersten Antriebswelle 8 zugewandten Fläche des Messerträgers 21 vorgesehen sein und parallel zu der Drehachse x in Richtung der ersten Antriebswelle 8 vorstehen, und die Anbringungslöcher 28 können in einer dem Messerträger 21 zugewandten Fläche der ersten Antriebswelle 8 ausgebildet sein.

Die Mitnehmerstifte 12 und die Anbringungslöcher 28 können weggelassen werden. In diesem Fall kann die Messerkassette 20 mittels der Schrauben 37, der Durchgangslöcher 37a, 38 und der Gewindelöcher 13 an der ersten Ausgangswelle 8 angebracht und positioniert werden.

Alternativ/zusätzlich zu den Mitnehmerstiften 12 können andere Anbringungsmittel, wie bspw. Vorsprünge, verwendet werden. Gleiches gilt für die Führungsstifte 11.

Die Positionen der Führungsstifte 11 und der Langlöcher 26 können vertauscht werden. Bspw. können die Führungsstifte 11 an Flächen der Schneidmesser 23, die dem Messerträger 21 bzw. der zweiten Antriebswelle 9 zugewandt sind, vorgesehen sein und parallel zu der Drehachse x durch die Langlöcher 29 in dem Messerträger 21 hindurch in Richtung der zweiten Antriebswelle 9 vorstehen, und die Langlöcher 26 können in einer dem Messerträger 21 zugewandten Fläche der zweiten Antriebswelle 9 ausgebildet sein.

Die Langlöcher 26 können als geradlinige oder gekrümmte Führungsnuten ausgebildet sein.

Die Positionen der Lagerzapfen 22 und der Löcher 25 können vertauscht werden. Bspw. können die Lagerzapfen 22 an Flächen der Schneidmesser 23 vorgesehen sein, die dem Messerträger 21 zugewandt sind, und die Löcher 25 können in einer den Schneidmessern 23 zugewandten Fläche des Messerträgers 21 ausgebildet sein.

Die Positionen der ersten und der zweiten Antriebswelle 8, 9 können vertauscht werden. Die erste Antriebswelle 8 kann innerhalb der zweiten Antriebswelle 9 verlaufen. In diesem Fall müssen ggf. die Positionen der Anbringungslöcher 28, der Durchgangslöcher 38, der Langlöcher 26, 29, der Lagerzapfen 22 und der Löcher 25 entsprechend angepasst werden. Bspw. können die Löcher 25 in einem mittleren Bereich der Schneidmesser 23 entlang ihrer jeweiligen Längserstreckungsrichtung vorgesehen sein, und die Lagerzapfen 22 können an entsprechenden Positionen vorgesehen sein. Die Langlöcher 29 können in einem radial äußeren Bereich des Messerträgers 21 liegen, und die Langlöcher 26 können an entsprechenden Positionen in den Schneidmessern 23 angeordnet sein. Die Anbringungslöcher 28 und die Durchgangslöcher 38 können radial weiter innen liegen als die Langlöcher 29.

Die Anbringungslöcher 28 können bspw. als Durchgangslöcher oder als Sacklöcher ausgebildet sein. Falls die Anbringungslöcher 28 als Durchgangslöcher in dem Messerträger 21 ausgebildet sind, können in der Deckplatte 27 an den Anbringungslöchern 28 entsprechenden Stellen ebenfalls Löcher (Durchgangslöcher oder Sacklöcher) zur Aufnahme der Mitnehmerstifte 12 ausgebildet sein.

Der Messerträger 21 kann bspw. zwei oder mehr, insbesondere drei oder vier oder sechs oder acht, Schneidmesser 23 schwenkbar lagern.

Der Antrieb der ersten und der zweiten Antriebswelle 8, 9 muss nicht zwingend über die Riemen 6 erfolgen, sondern kann bspw. über Zahnräder erfolgen. Das Gehäuse 7 muss nicht die in den Figuren 1 und 2 gezeigte Plattenform aufweisen, sondern kann eine andere Form aufweisen, die eine geeignete Lagerung der ersten und der zweiten Antriebswelle 8, 9 ermöglicht.

Alternativ zu der Ausgestaltung mit zwei Antriebsmotoren 5 können die beiden Antriebswellen 8, 9 analog zu der in der WO 2020/119916 A1 offenbarten Technik mit einem Antriebsmotor angetrieben werden, wobei ein Stellmotor für die Verdrehung der Antriebswellen 8, 9 relativ zueinander sorgt.

Es wird explizit erklärt, dass alle Merkmale, die in der Beschreibung und/oder den Ansprüchen offenbart sind, dazu bestimmt sind, separat und unabhängig voneinander sowohl für den Zweck der ursprünglichen Offenbarung als auch für den Zweck der Beschränkung der beanspruchten Erfindung unabhängig von der Zusammenstellung der Merkmale in den Ausführungsformen und/oder den Ansprüchen offenbart zu werden. Es wird explizit erklärt, dass alle Wertebereiche oder Angaben von Gruppen von Objekten jeden möglichen Zwischenwert oder jedes mögliche dazwischen liegende Objekt sowohl für den Zweck der ursprünglichen Offenbarung als auch für den Zweck der Beschränkung der beanspruchten Erfindung, insbesondere zur Bestimmung der Grenzen von Wertebereichen offenbaren.

## Patentansprüche

1. Abisoliervorrichtung (1) zum Abisolieren von Kabeln, mit:
- einem Grundmodul (10) mit einem Gehäuse (7) und zwei an dem Gehäuse (7) koaxial gelagerten, ineinander verlaufenden und relativ zu dem Gehäuse (7) und zueinander drehbaren Antriebswellen (8, 9); und
- einer Messerkassette (20) mit
- einem Messerträger (21), der an einem Ende einer ersten (8) der zwei Antriebswellen des Grundmoduls (10) lösbar anbringbar ist, und
- einem Schneidmesser (23), das eine in Richtung der Drehachse (x) gewandte Schneide (24) zum Einschneiden in eine Isolierung aufweist und an einem Schwenkpunkt (22, 25) um eine Schwenkachse (v) parallel zu der Drehachse (x) schwenkbar an dem Messerträger (21) angebracht ist,
bei der
der Messerträger (21) und die erste Antriebswelle (8) Anbringungsmittel (12, 28) zur lösbaren Anbringung des Messerträgers (21) an der ersten Antriebswelle (8) in einer vorbestimmten Drehposition relativ zu der ersten Antriebswelle (8) aufweisen,
das Schneidmesser (23) oder die zweite Antriebswelle (9) eine Führungsnut (26) zum Eingriff eines Führungselements (11), das an dem/der anderen von dem Schneidmesser (23) und der zweiten Antriebswelle (9) vorgesehen ist, aufweist, und
das Schneidmesser (23) durch Drehung der zweiten Antriebswelle (9) relativ zu der ersten Antriebswelle (8) und dem Messerträger (21) und eine daraus resultierende Bewegung des Führungselements (11) entlang der Führungsnut (26) relativ zu dem Messerträger (21) auf die Drehachse (x) zu und von der Drehachse (x) weg schwenkbar ist.

2. Abisoliervorrichtung (1) nach Anspruch 1, bei der
die erste und die zweite Antriebswelle (8, 9) auch in einem Zustand, in dem die Messerkassette (20) nicht an dem Grundmodul (10) angebracht ist, drehbar an dem Gehäuse (10) gelagert sind, und/oder
die Messerkassette (20) ausschließlich über die erste und/oder die zweite Antriebswelle (8, 9) an dem Gehäuse (7) gelagert ist.

3. Abisoliervorrichtung (1) nach Anspruch 1 oder 2, bei der
die erste und die zweite Antriebswelle (8, 9) ineinander gelagert sind, und/oder
der Messerträger (21) entlang der Drehachse (x) eine Öffnung (21a) zum Hindurchführen eines Kabels aufweist.

4. Abisoliervorrichtung (1) nach einem der Ansprüche 1 bis 3, bei der
der Messerträger (21) oder die erste Antriebswelle (8) ein Mitnehmerloch (28) oder eine Mitnehmerkerbe zum Eingriff eines Mitnehmerstifts (12), der an dem/der anderen von dem Messerträger (21) und der ersten Antriebswelle (8) vorgesehen ist und sich parallel zu der Drehachse (x) erstreckt, aufweist, und/oder
das Führungselement (11), das an dem Schneidmesser (23) oder der zweiten Antriebswelle (9) vorgesehen ist, als Führungsstift (11) ausgebildet ist, der sich parallel zu der Drehachse (x) erstreckt, und/oder
die Führungsnut (26) als gekrümmtes oder geradliniges Langloch ausgebildet ist.

5. Abisoliervorrichtung (1) nach einem der Ansprüche 1 bis 4, bei der
die Messerkassette (20) eine Mehrzahl von Schneidmessern (23), insbesondere zwei, drei, vier, sechs oder acht Schneidmesser (23) aufweist, und/oder
der Messerträger (21) und die erste Antriebswelle (8) jeweils eine Mehrzahl von Anbringungsmitteln (12, 28) aufweisen.

6. Abisoliervorrichtung (1) nach einem der Ansprüche 1 bis 5, bei der die Messerkassette (20) durch eine zentrale Überwurfmutter an der ersten Antriebswelle (8) des Grundmoduls (10) anbringbar ist.

7. Abisoliervorrichtung (1) nach einem der Ansprüche 1 bis 6, bei der
die Messerkassette (20) ferner eine Deckplatte (27) aufweist,
die Deckplatte (27) entlang der Drehachse (x) eine Öffnung (27a) zum Hindurchführen des Kabels aufweist,
das Schneidmesser (23) zwischen dem Messerträger (21) und der Deckplatte (27) vorgesehen ist, und/oder
die Deckplatte (27) an dem Messerträger (21) befestigt, insbesondere verschraubt, ist.

8. Grundmodul (10) für eine Abisoliervorrichtung (1) nach einem der Ansprüche 1 bis 7, mit einem Gehäuse (7) und zwei an dem Gehäuse (7) koaxial gelagerten, ineinander verlaufenden und relativ zu dem Gehäuse (7) und zueinander drehbaren Antriebswellen (8, 9), bei dem
eine erste (8) der zwei Antriebswellen ein Anbringungsmittel (12) zur lösbaren Anbringung eines Messerträgers (21) an einem Ende der ersten Antriebswelle (8) in einer vorbestimmten Drehposition relativ zu der ersten Antriebswelle (8) aufweist, und
die zweite Antriebswelle (9) eine Führungsnut (26) oder ein Führungselement (11) zum Schwenken des Schneidmessers (23) der Messerkassette (20) aufweist.

9. Messerkassette (20) für eine Abisoliervorrichtung (1) nach einem der Ansprüche 1 bis 7, mit
- einem Messerträger (21), der an einem Ende einer ersten (8) der zwei Antriebswellen des Grundmoduls (10) der Abisoliervorrichtung (1) lösbar anbringbar ist, und
- einem Schneidmesser (23), das eine in Richtung der Drehachse (x) gewandte Schneide (24) zum Einschneiden in eine Isolierung aufweist und an einem Schwenkpunkt (22, 25) um eine Schwenkachse (v) parallel zu der Drehachse (x) schwenkbar an dem Messerträger (21) angebracht ist,
bei der
der Messerträger (21) ein Anbringungsmittel (28) zur lösbaren Anbringung des Messerträgers (21) an der ersten Antriebswelle (8) in einer vorbestimmten Drehposition relativ zu der ersten Antriebswelle (8) aufweist,
das Schneidmesser (23) eine Führungsnut (26) oder ein Führungselement (11) aufweist, die/das dazu ausgebildet ist, mit einem Führungselement (11) bzw. einer Führungsnut (26), das/die an der zweiten Antriebswelle (9) vorgesehen ist, in Eingriff gebracht zu werden, und
das Schneidmesser (23) durch Drehung der zweiten Antriebswelle (9) relativ zu der ersten Antriebswelle (8) und dem Messerträger (21) und eine daraus resultierende Bewegung des Führungselements (11) entlang der Führungsnut (26) relativ zu dem Messerträger (21) auf die Drehachse (x) zu und von der Drehachse (x) weg schwenkbar ist.

10. Kalibrationsstation (40) für eine Messerkassette (20) nach Anspruch 9, mit:
- einer Anbringungseinheit mit zwei koaxial ineinander verlaufenden und relativ zueinander drehbaren Wellen (48, 49), bei der
die erste Welle (48) ein Anbringungsmittel (12) zur lösbaren Anbringung des Messerträgers (21) an einem Ende der ersten Welle (48) in einer vorbestimmten Drehposition relativ zu der ersten Welle (48) aufweist, und
die zweite Welle (9) eine Führungsnut (26) oder ein Führungselement (11) zum Schwenken des Schneidmessers (23) aufweist; und
- einer Skala (41) zum Anzeigen einer Drehstellung der zweiten Welle (49) relativ zu der ersten Welle (48).

11. System mit:
- einer Abisoliervorrichtung (1) nach einem der Ansprüche 1 bis 7;
- einer Kalibrationsstation (40) nach Anspruch 10; und
- einem Lehrdorn (42), der dazu ausgebildet ist, anstelle eines Kabels entlang der Drehachse (x) in die Messerkassette (20) eingefügt zu werden und die Schneide (24) des Schneidmessers (23) zu kontaktieren.

12. Montagehilfe (30) für eine Abisoliervorrichtung (1) nach einem der Ansprüche 1 bis 7, mit:
- einem zentralen Zapfen (31), der dazu ausgebildet ist, entlang der Drehachse (x) in die Öffnung (21a) in die Messerkassette (20) eingefügt zu werden und die Schneide (24) des Schneidmessers (23) zu kontaktieren; und/oder
- einem Positionsstift (33), der dazu ausgebildet ist, in die Führungsnut (26) des Schneidmessers (23) eingefügt zu werden und das Schneidmesser (23) in einer bestimmten Stellung zu fixieren.

13. Montagehilfe (30) nach Anspruch 12, ferner mit einem Magneten (32), der dazu ausgebildet ist, die Montagehilfe (30) an der Messerkassette (20) zu halten.

14. Montagehilfe (30) nach Anspruch 12 oder 13 für eine Abisoliervorrichtung (1) nach Anspruch 7, ferner mit einem Schnellkupplungsmechanismus, insbesondere einem Spreizdorn oder einem Bajonettverschluss, der dazu ausgebildet ist, die Deckplatte (27) und den Messerträger (21) zusammenzuhalten.

15. System mit einer Abisoliervorrichtung (1) nach einem der Ansprüche 1 bis 7 und einer Montagehilfe (30) nach einem der Ansprüche 12 bis 14.

## Geänderte Patentansprüche

### Geänderte Patentansprüche gemäss Regel 137(2) EPÜ.

1. Abisoliervorrichtung (1) zum Abisolieren von Kabeln, mit:
- einem Grundmodul (10) mit einem Gehäuse (7) und zwei an dem Gehäuse (7) koaxial gelagerten, ineinander verlaufenden und relativ zu dem Gehäuse (7) und zueinander drehbaren Antriebswellen (8, 9); und
- einer Messerkassette (20) mit
- einem Messerträger (21), der an einem Ende einer ersten (8) der zwei Antriebswellen des Grundmoduls (10) lösbar anbringbar ist, und
- einem Schneidmesser (23), das eine in Richtung der Drehachse (x) gewandte Schneide (24) zum Einschneiden in eine Isolierung aufweist und an einem Schwenkpunkt (22, 25) um eine Schwenkachse (v) parallel zu der Drehachse (x) schwenkbar an dem Messerträger (21) angebracht ist,
bei der
der Messerträger (21) und die erste Antriebswelle (8) Anbringungsmittel (12, 28) zur lösbaren Anbringung des Messerträgers (21) an der ersten Antriebswelle (8) in einer vorbestimmten Drehposition relativ zu der ersten Antriebswelle (8) aufweisen,
das Schneidmesser (23) oder die zweite Antriebswelle (9) eine Führungsnut (26) zum Eingriff eines Führungselements (11), das an dem/der anderen von dem Schneidmesser (23) und der zweiten Antriebswelle (9) vorgesehen ist, aufweist, und
das Schneidmesser (23) durch Drehung der zweiten Antriebswelle (9) relativ zu der ersten Antriebswelle (8) und dem Messerträger (21) und eine daraus resultierende Bewegung des Führungselements (11) entlang der Führungsnut (26) relativ zu dem Messerträger (21) auf die Drehachse (x) zu und von der Drehachse (x) weg schwenkbar ist.

2. Abisoliervorrichtung (1) nach Anspruch 1, bei der
die erste und die zweite Antriebswelle (8, 9) auch in einem Zustand, in dem die Messerkassette (20) nicht an dem Grundmodul (10) angebracht ist, drehbar an dem Gehäuse (10) gelagert sind, und/oder
die Messerkassette (20) ausschließlich über die erste und/oder die zweite Antriebswelle (8, 9) an dem Gehäuse (7) gelagert ist.

3. Abisoliervorrichtung (1) nach Anspruch 1 oder 2, bei der
die erste und die zweite Antriebswelle (8, 9) ineinander gelagert sind, und/oder
der Messerträger (21) entlang der Drehachse (x) eine Öffnung (21a) zum Hindurchführen eines Kabels aufweist.

4. Abisoliervorrichtung (1) nach einem der Ansprüche 1 bis 3, bei der
der Messerträger (21) oder die erste Antriebswelle (8) ein Mitnehmerloch (28) oder eine Mitnehmerkerbe zum Eingriff eines Mitnehmerstifts (12), der an dem/der anderen von dem Messerträger (21) und der ersten Antriebswelle (8) vorgesehen ist und sich parallel zu der Drehachse (x) erstreckt, aufweist, und/oder
das Führungselement (11), das an dem Schneidmesser (23) oder der zweiten Antriebswelle (9) vorgesehen ist, als Führungsstift (11) ausgebildet ist, der sich parallel zu der Drehachse (x) erstreckt, und/oder
die Führungsnut (26) als gekrümmtes oder geradliniges Langloch ausgebildet ist.

5. Abisoliervorrichtung (1) nach einem der Ansprüche 1 bis 4, bei der
die Messerkassette (20) eine Mehrzahl von Schneidmessern (23), insbesondere zwei, drei, vier, sechs oder acht Schneidmesser (23) aufweist, und/oder
der Messerträger (21) und die erste Antriebswelle (8) jeweils eine Mehrzahl von Anbringungsmitteln (12, 28) aufweisen.

6. Abisoliervorrichtung (1) nach einem der Ansprüche 1 bis 5, bei der die Messerkassette (20) durch eine zentrale Überwurfmutter an der ersten Antriebswelle (8) des Grundmoduls (10) anbringbar ist.

7. Abisoliervorrichtung (1) nach einem der Ansprüche 1 bis 6, bei der die Messerkassette (20) ferner eine Deckplatte (27) aufweist,
die Deckplatte (27) entlang der Drehachse (x) eine Öffnung (27a) zum Hindurchführen des Kabels aufweist,
das Schneidmesser (23) zwischen dem Messerträger (21) und der Deckplatte (27) vorgesehen ist, und/oder
die Deckplatte (27) an dem Messerträger (21) befestigt, insbesondere verschraubt, ist.

8. Grundmodul (10) für eine Abisoliervorrichtung (1) nach einem der Ansprüche 1 bis 7, mit einem Gehäuse (7) und zwei an dem Gehäuse (7) koaxial gelagerten, ineinander verlaufenden und relativ zu dem Gehäuse (7) und zueinander drehbaren Antriebswellen (8, 9), bei dem
eine erste (8) der zwei Antriebswellen ein Anbringungsmittel (12) zur lösbaren Anbringung eines Messerträgers (21) an einem Ende der ersten Antriebswelle (8) in einer vorbestimmten Drehposition relativ zu der ersten Antriebswelle (8) aufweist, und
die zweite Antriebswelle (9) eine Führungsnut (26) oder ein Führungselement (11) zum Schwenken des Schneidmessers (23) der Messerkassette (20) aufweist.

9. Messerkassette (20) für eine Abisoliervorrichtung (1) nach einem der Ansprüche 1 bis 7, mit
- einem Messerträger (21), der an einem Ende einer ersten (8) der zwei Antriebswellen des Grundmoduls (10) der Abisoliervorrichtung (1) lösbar anbringbar ist, und
- einem Schneidmesser (23), das eine in Richtung der Drehachse (x) gewandte Schneide (24) zum Einschneiden in eine Isolierung aufweist und an einem Schwenkpunkt (22, 25) um eine Schwenkachse (v) parallel zu der Drehachse (x) schwenkbar an dem Messerträger (21) angebracht ist,
bei der
der Messerträger (21) ein Anbringungsmittel (28) zur lösbaren Anbringung des Messerträgers (21) an der ersten Antriebswelle (8) in einer vorbestimmten Drehposition relativ zu der ersten Antriebswelle (8) aufweist,
das Schneidmesser (23) eine Führungsnut (26) oder ein Führungselement (11) aufweist, die/das dazu ausgebildet ist, mit einem Führungselement (11) bzw. einer Führungsnut (26), das/die an der zweiten Antriebswelle (9) vorgesehen ist, in Eingriff gebracht zu werden, und
das Schneidmesser (23) durch Drehung der zweiten Antriebswelle (9) relativ zu der ersten Antriebswelle (8) und dem Messerträger (21) und eine daraus resultierende Bewegung des Führungselements (11) entlang der Führungsnut (26) relativ zu dem Messerträger (21) auf die Drehachse (x) zu und von der Drehachse (x) weg schwenkbar ist.

10. Kalibrationsstation (40) für eine Messerkassette (20) nach Anspruch 9, mit:
- einer Anbringungseinheit mit zwei koaxial ineinander verlaufenden und relativ zueinander drehbaren Wellen (48, 49), bei der
die erste Welle (48) ein Anbringungsmittel (12) zur lösbaren Anbringung des Messerträgers (21) an einem Ende der ersten Welle (48) in einer vorbestimmten Drehposition relativ zu der ersten Welle (48) aufweist, und
die zweite Welle (9) eine Führungsnut (26) oder ein Führungselement (11) zum Schwenken des Schneidmessers (23) aufweist; und
- einer Skala (41) zum Anzeigen einer Drehstellung der zweiten Welle (49) relativ zu der ersten Welle (48).

11. System mit:
- einer Abisoliervorrichtung (1) nach einem der Ansprüche 1 bis 7;
- einer Kalibrationsstation (40) nach Anspruch 10; und
- einem Lehrdorn (42), der dazu ausgebildet ist, anstelle eines Kabels entlang der Drehachse (x) in die Messerkassette (20) eingefügt zu werden und die Schneide (24) des Schneidmessers (23) zu kontaktieren.
